(19)

Europäisches
Patentamt
European
Patent Office
Office européen
des brevets

(11) **EP 4 769 542 A1**

(12) **EUROPEAN PATENT APPLICATION**
published in accordance with Art. 153(4) EPC

(43) Date of publication:
**01.07.2026 Bulletin 2026/27**

(21) Application number: **24856672.1**

(22) Date of filing: **25.07.2024**

(51) International Patent Classification (IPC):
*H01M 4/36* (2006.01)       *H01M 4/38* (2006.01)
*H01M 4/587* (2010.01)      *H01M 10/0525* (2010.01)
*C01B 33/02* (2006.01)      *C01B 32/182* (2017.01)
*C01B 32/19* (2017.01)      *H01M 4/02* (2006.01)

(52) Cooperative Patent Classification (CPC):
**C01B 32/182; C01B 32/19; C01B 33/02;**
**H01M 4/02; H01M 4/36; H01M 4/38; H01M 4/587;**
**H01M 10/0525;** Y02E 60/10

(86) International application number:
**PCT/KR2024/010794**

(87) International publication number:
**WO 2025/042059 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **21.08.2023  KR 20230108733**
         **21.08.2023  KR 20230108734**

(71) Applicant: **BSG Materials Co., Ltd.**
**Bucheon-si Gyeonggi-do 14521 (KR)**

(72) Inventors:
• **YANG, Seung Jin**
  **Incheon 22018 (KR)**
• **KANG, Doo In**
  **Incheon 21616 (KR)**
• **SEO, Dae Hoon**
  **Ansan-si, Gyeonggi-do 15381 (KR)**
• **KIM, Min Soo**
  **Bucheon-si, Gyeonggi-do 14634 (KR)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **STRUCTURE OF SILICON-GRAPHENE COMPOSITE AND NEGATIVE ELECTRODE ACTIVE MATERIAL FOR LITHIUM SECONDARY BATTERY COMPRISING SAME**

(57)    An embodiment of the present invention provides: a silicon-graphene composite in which, in a cross section thereof including the center, a plurality of pair layers are arranged as unit circles, the plurality of unit circles being arranged in a concentric circle form, and each pair layer comprises a graphene layer and a particle layer including a plurality of nano-silicon particles uniformly positioned on the graphene layer; and a method for dispersing a silicon-graphite fusion precursor. According to an embodiment of the present invention, silicon particles can be uniformly dispersed on the surface of graphite. A negative electrode active material and a lithium secondary battery manufactured by this way may exhibit optimal charge and discharge capacity and initial efficiency, and cycle characteristics.

FIG. 1

EP 4 769 542 A1

## Description

Technical Field

The present invention relates to a structure of a silicon-graphene composite and a negative electrode active material for a lithium secondary battery including the same, and more particularly, to a method for dispersing a silicon-graphite fusion precursor to form a state in which silicon particles are uniformly dispersed on graphite, and a method for optimizing the structure of a silicon-graphene composite into a concentric, repeating arrangement structure to improve optimal charge/discharge capacity, initial efficiency, and cycle characteristics as a negative electrode active material for a lithium secondary battery.

Background Art

With the proliferation of portable electronic devices and the expansion of the electric vehicle market, research into rechargeable secondary batteries is actively underway. Along with existing nickel-cadmium batteries, nickel-metal hydride batteries, nickelhydrogen batteries, and lithium secondary batteries, the development of materials with improved stability, capacity, and energy density is accelerating.

Among various types of secondary batteries, lithium secondary batteries are composed of a positive electrode with a positive electrode active material layer, a negative electrode with a negative electrode active material layer, and a separator that electrically insulates the positive and negative electrodes. Conducting agent particles must be well dispersed within the electrode active material slurry to maintain uniform ionic conductivity in the electrode active material layer.

However, when using conventional dispersion methods, differences in particle size and specific gravity between the electrode active material and the conductive agent make it difficult to uniformly disperse the conductive agent particles within the slurry, and this leads to reduced electrochemical charge-discharge characteristics, stability, and long-term reliability.

Our own research revealed the problem that, in the case of conventional plasma-treated silicon-graphite fusion precursors, even when silicon particles are well dispersed on the graphite, there is some non-uniformity, and the silicon particles are present on the expanded graphite, making sphericalization difficult; thus, this hinders their direct application as a negative electrode active material.

Therefore, there was a need to improve uniformity through dispersion, wherein when dispersing the silicon-graphite fusion precursor by a dry method, the exfoliation state of the graphite (plate-like graphite/graphene) is not uniform, making it difficult to control the thickness and particle size, and some agglomeration of silicon particles occurs, resulting in a decrease in charge/discharge characteristics and initial efficiency when evaluated electrochemically, and poor long-term reliability.

Detailed Description of the Invention

Technical Problem

An aspect of the present invention is to provide a dispersion method capable of dispersing a silicon-graphite fusion precursor and a structure of a silicon-graphene composite capable of manufacturing an optimal negative electrode active material, in order to manufacture an optimal negative electrode active material for improving the charge/discharge capacity and initial efficiency of a lithium secondary battery and implementing cycle characteristics.

The aspect of the present invention is not limited to that mentioned above, and other aspects not mentioned will be clearly understood by those skilled in the art from the description below.

Technical Solution

An embodiment of the present invention provides silicon-graphene composite in which, in a cross section thereof including the center, a plurality of pair layers are arranged as unit circles, the plurality of unit circles being arranged in a concentric circle form, and each pair layer includes: a graphene layer; and a particle layer including a plurality of nano-silicon particles uniformly positioned on the graphene layer.

In an embodiment of the present invention, the pair layers may form a circular shape in a connected or unconnected state.

In an embodiment of the present invention, the thickness of the pair layers may be 50 nm to 500 nm.

In an embodiment of the present invention, the thickness of the graphene layer may be 1 nm to 300 nm.

An embodiment of the present invention provides a method for dispersing a silicon-graphite fusion precursor, the method including: preparing a silicon-graphite fusion precursor; plasma-treating the silicon-graphite fusion precursor; and dispersing the plasma-treated silicon-graphite fusion precursor through a wet grinding process to form a silicon-graphene composite.

In an embodiment of the present invention, the silicon-graphite fusion precursor may have a structure in which a plurality of silicon particles are positioned on the upper and lower portions of plate-like graphite.

In an embodiment of the present invention, the content of the silicon may be greater than 0 and less than or equal to 70 wt%, wherein the content of the silicon is in the case in which the fusion precursor is applied alone, a mixture of the fusion precursor and silicon is applied, or a composite mixed with expanded graphite and silicon is applied.

In an embodiment of the present invention, in the plasma-treating of the silicon-graphite fusion precursor, nitrogen ($N_2$) may be purged into a silicon-expanded graphite mixture, which is a silicon-graphite fusion precursor, and DC plasma treatment is performed.

In an embodiment of the present invention, a solvent used in the wet grinding process may have a boiling point of 60 to 160°C.

In an embodiment of the present invention, a solvent used in the wet grinding process may be (any solvent).

In an embodiment of the present invention, a solvent used in the wet grinding process may have a Hansen Solubility Parameter ($\partial$) of 17 to 23 MPa ½ or 45 to 50 MPa ½.

In an embodiment of the present invention, the wet grinding process may add a dispersant or coupling agent enabling to chemically activate the fusion precursor.

In an embodiment of the present invention, the wet grinding process may homogenize the fusion precursor by applying shear stress and cavitation.

In an embodiment of the present invention, the silicon-graphene composite may be a structure in which a plurality of silicon particles are positioned on the surface of single exfoliated graphene.

In an embodiment of the present invention, the silicon particles may be uniformly distributed on the upper and lower portions of the single graphene.

Another embodiment of the present invention provides a method for manufacturing silicon-graphene, the method including: preparing a silicon-graphite fusion precursor; plasma-treating the silicon-graphite fusion precursor; dispersing the plasma-treated silicon-graphite fusion precursor through a wet grinding process to form an exfoliated silicon-graphene composite; binder-coating the exfoliated silicon-graphene composite; and granulating the binder-coated exfoliated silicon-graphene composite to manufacture a granulated silicon-graphene composite.

In an embodiment of the present invention, the thickness of the graphene layer may be 1 nm to 300 nm.

Another embodiment of the present invention provides a negative electrode active material for a lithium secondary battery, the negative electrode active material including the above-described silicon-graphene composite.

Advantageous Effects

According to an embodiment of the present invention, the structure of a silicon-graphene composite can be optimized to have graphene layers and silicon particle layers arranged in a concentric, repeating pattern.

According to an embodiment of the present invention, silicon particles can be uniformly dispersed on the graphite surface through the dispersion of a silicon-graphite fusion precursor.

The negative electrode active material and lithium secondary battery manufactured through this method can exhibit optimal charge/discharge capacity, initial efficiency, and cycle characteristics.

The effects of the present invention are not limited to the effects described above, and should be understood to include all effects that are inferable from the configuration of the present invention described in the detailed description or claims of the present invention.

Brief Description of the Drawings

FIG. 1 is a schematic view showing a cross-section of a silicon-graphene composite.

FIGS. 2 and 3 are SEM images of a cross-section of a silicon-graphene composite with poor dispersion.

FIG. 4 is an SEM image and EDS Mapping images of a cross-section of a silicon-graphene composite with the highest dispersion.

FIG. 5 is an SEM image and EDS Mapping images of a cross-section of a silicon-graphene composite with high dispersion.

FIGS. 6 and 7 are SEM images and EDS Mapping images of a cross-section of a silicon-graphene composite with low dispersion.

FIG. 8 shows electrode surface images of a composite electrode manufactured using a high dispersion silicon-graphene composite after approximately 40 cycles.

FIG. 9 shows electrode surface images of a composite electrode manufactured using a low dispersion silicon-graphene composite after approximately 40 cycles.

FIG. 10 shows the cycle capacity change graph of a mixed electrode manufactured using a silicon-graphene composite by dispersion degree. (Mixed electrode capacity: 450 mAh/g)

FIG. 11 shows the cycle capacity retention graph of a mixed electrode manufactured using a silicon-graphene composite by dispersion degree.

FIG. 12 is the cycle coulombic efficiency graph of a mixed electrode manufactured using a silicon-graphene composite by dispersion degree.

FIG. 13 is a schematic view showing the state of a silicon-graphite fusion precursor before and after dispersion.

FIG. 14 is a SEM image of the silicon-graphite fusion precursor.

FIGS. 15 and 16 are (a) an SEM image showing silicon particles agglomerated rather than uniformly dispersed on the graphene surface, and EDS mapping images of (b) silicon and (c) graphene.

FIG. 17 is (a) an SEM image showing silicon particles uniformly dispersed on the graphene surface, and EDS mapping images of (b) silicon and (c) graphene.

FIG. 18 is a cross-section of a negative electrode active material manufactured using the silicon-graphene composite of FIGS. 15 and 16.

FIG. 19 is a cross-section of a negative electrode active material manufactured using the silicon-graphene composite of FIG. 17.

FIG. 20 is a flowchart illustrating the step-by-step process from the plasma treatment step to the final property evaluation.

FIG. 21 is a graph showing the electrochemical evaluation result of Comparative Example.

FIG. 22 is a graph showing the electrochemical evaluation result of Manufacturing Example 1.

FIG. 23 is a graph showing the electrochemical evaluation result of Manufacturing Example 2.

FIG. 24 is a graph showing the cycle retention of Comparative Example, Manufacturing Example 1, and Manufacturing Example 2.

FIGS. 25 and 26 show the results of observing the surface condition of the negative electrode after cleaning it with a DMC solution in a charged state after cycle retention.

Mode for Carrying Out the Invention

Hereinafter, the present invention will be described with reference to the accompanying drawings. However, the present invention may be implemented in various different forms and, therefore, is not limited to the embodiments described herein. In addition, in order to clearly describe the present invention in the drawings, parts that are not related to the description are omitted, and similar parts are given similar drawing reference numerals throughout the specification.
In the entire specification, when a part is said to be "connected (linked, contacted, coupled)" to another part, this includes not only the case where it is "directly connected" but also the case where it is "indirectly connected" with another member in between. In addition, when a part is said to "include" a certain component, this does not exclude other components unless specifically stated to the contrary, but rather means that other components may be additionally provided.

The terms used in this specification are used only to describe specific embodiments and are not intended to limit the present invention. The singular expression includes the plural expression unless the context clearly indicates otherwise. In this specification, the terms "include" or "have" are intended to specify the presence of a feature, number, step, operation, component, part, or combination thereof described in the specification, but should be understood as not excluding in advance the possibility of the presence or addition of one or more other features, numbers, steps, operations, components, parts, or combinations thereof.

Hereinafter, embodiments of the present invention will be described in detail with reference to the accompanying drawings.

"High dispersion" means that dispersion is effective and the silicon particles are evenly or uniformly distributed on the graphene layer.

"Low dispersion" means that dispersion is ineffective and the silicon particles are not evenly or uniformly distributed on the graphene layer, but rather are partially aggregated.

"Silicon-graphene composite" means a composite formed by fusing graphene exfoliated from graphite with silicon particles to form a plurality of layers.

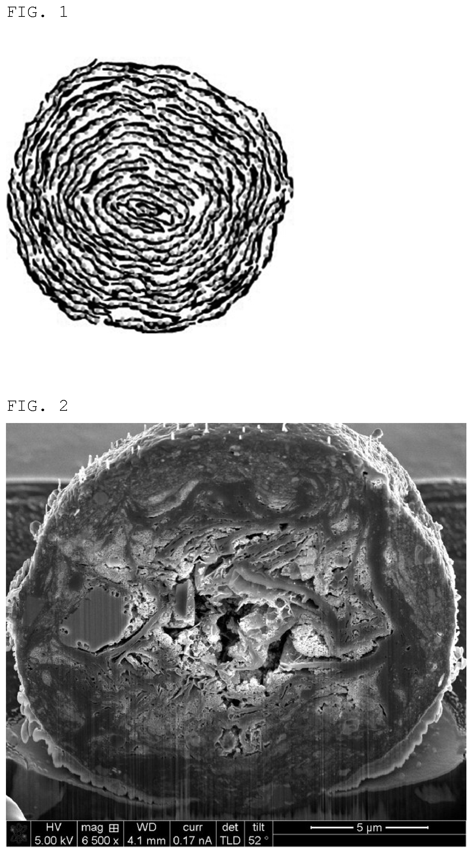

FIG. 1 is a schematic view showing a cross-section of a silicon-graphene composite.

Referring to FIG. 1, the structure of a silicon-graphene composite according to an embodiment of the present invention will be described.

A silicon-graphene composite according to an embodiment of the present invention may be characterized by a cross-section including the center, wherein a plurality of pair layers are arranged in unit circles, and the unit circles are arranged in a concentric pattern, wherein each pair layer includes: a graphene layer; and a particle layer including a plurality of nano-silicon particles uniformly positioned on the graphene layer.

When silicon particles are uniformly distributed and well dispersed on the graphene surface, the negative electrode active material and secondary battery manufactured using the composite may exhibit high charge/discharge characteristics and stable cycle performance.

If the silicon particles are not uniformly dispersed, pores are observed within the composite, and the aggregation of these silicon particles or the presence of pores within the composite may result in a decrease in the electrical capacity and initial efficiency during electrochemical evaluation of the secondary battery.

The pair layers may be connected or disconnected and form a circle. A single graphene layer may not be a single, connected circle, and may form a circle with some disconnected layers.

The thickness of the pair layer may be 50 nm to 500 nm. This may correspond to 2 to 20 pair layers positioned per 1 $\mu$m. However, this is not limited thereto. The thickness of the pair layers may be 50 nm to 500 nm, but is not limited thereto.

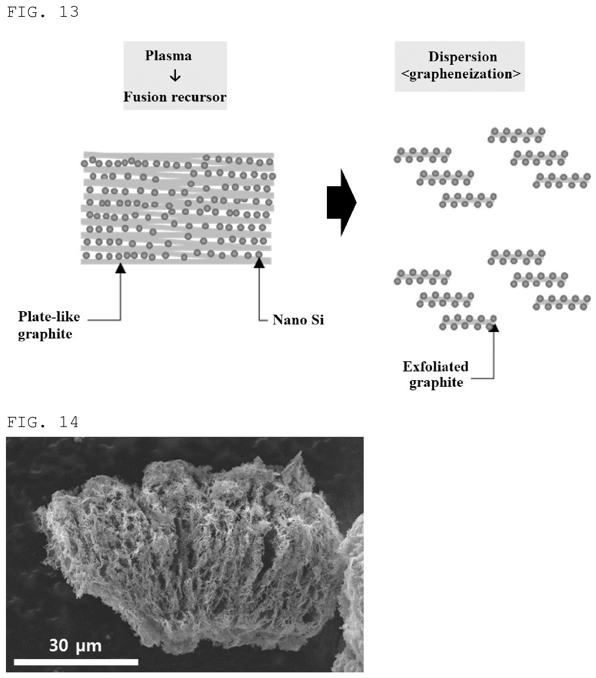

*FIG. 13 is a schematic view showing the state of a silicon-graphite fusion precursor before and after dispersion.

Referring to FIG. 13, a method for dispersing a silicon-graphite fusion precursor according to an embodiment of the present invention will be described.

A method for dispersing a silicon-graphite fusion precursor according to an embodiment of the present invention may include: preparing a silicon-graphite fusion precursor; plasma-treating the silicon-graphite fusion precursor; and dispersing the plasma-treated silicon-graphite fusion precursor using a wet grinding process to form a silicon-graphene composite.

First, a silicon-graphite fusion precursor is prepared.

The silicon may be $\mu$m-sized amorphous silicon or submicron-sized silicon sludge, a byproduct of solar cell ingot manufacturing. The graphite used is expanded graphite, which is obtained by intercalating flaked graphite with a strong acid. A Si-expanded graphite mixture is prepared by mixing 0 to 70 wt% Si powder and 99.9 to 30 wt% expanded graphite in a mixer.

The silicon content may be 0 to 70 wt%, wherein the content of the silicon is in the case in which the fusion precursor is applied alone, a mixture of the fusion precursor and silicon is applied, or a composite mixed with expanded graphite and silicon is applied. Here, if Si is mixed at a level exceeding 70 wt%, the excessive Si does not condense into nano-silicon, but rather, multiple nano-Si growths occur within the fusion precursor, significantly increasing the likelihood of forming $\mu$m-scale Si.

The next is the plasma-treating the silicon-graphite fusion precursor.

The plasma-treating the silicon-graphite fusion precursor involves N$_2$ purging the Si-expanded graphite mixture, which is the previously prepared silicon-graphite fusion precursor, with 20 kW and subjecting it to DC plasma treatment to vaporize Si, wherein simultaneously, the expanded graphite expands, condensing nano-sized Si between the expanded graphite layers, and this ultimately yields a fusion precursor combining plasma-treated silicon and graphite.

The silicon-graphite fusion precursor may be characterized by a structure in which a plurality of silicon particles are positioned on the upper and lower portions of the plate-like graphite. This may result in the nano-silicon particles being unevenly distributed in the expanded graphite.

The next is dispersing the plasma-treated silicon-graphite fusion precursor through a grinding process to form an exfoliated silicon-graphene composite.

The grinding process may be characterized as a wet grinding process. When dispersing the silicon-graphite fusion precursor using a conventional dry grinding process, the exfoliated graphite state (plate-like graphite/graphene) is not uniform, making it difficult to control thickness and particle size; furthermore, silicon particle agglomeration may occur, resulting in reduced charge/discharge characteristics and initial efficiency during electrochemical evaluation, as well as poor long-term reliability.

The solvent used in the wet grinding process may be a single aqueous or organic solvent, or a combination of miscible solvents. Solvents such as water and others like below may be used: alcohols, including ethanol, isopropanol, n-butanol, amyl alcohol, and cyclohexanol; ketones, such as acetone, MEK, MIBK, and cyclohexanone; esters, including ethyl acetate, isopropanol acetate, n-butyl acetate, and amyl acetate; hydrocarbons, including mineral spirits, heptane, cyclohexane, toluene, and xylene; glycolether acetates, including butyl cellosolve, ethyl cellosolve, acetate, butyl carbitol, and butyl carbitol acetate; halogenated hydrocarbons, including 1.1.1-trichloroethane (1.1.1-TCE), TCE and EDC (1,2-dichloroethane); furan-based products, including tetrahydrofuran; and lactam-based products, including NMP (N-Methyl-2-pyrrolidone).

The optimal solvent conditions are preferably a boiling point between 60 and 160°C, and the Hansen Solubility Parameter ($\partial$) of the solvent is preferably between 17 and 23 MPa ½ or between 45 and 50 MPa ½. More preferably, it may be between 18-22 MPa ½ or between 47-48 MPa ½.

Solvents satisfying this include Acetaldoxime, Acetic acid, Acetic anhydride, Acetonecyanhydrin, N-Acetyl caprolactam, Acetylacetone, Acetylbromide, Allyl acetate, Arryl acetoacetate, Allyl Alcohol, Amyl acetate, Benzene, N-benzyl pyrrolidone, 4-bromo-1-butene, 1-butanethiol, 2-buanol, 1-butene, Carbon tetrachloride, Chloro acetaldehyde, Cyclohexanone, Cyclohexanol, 2-chloro allyl alcohol, 4-chloro-1,2-butadiene, 1-chloro-2-butene, Ethanol, Isoamyl acetate, Methyl ethyl ketone, Isoamyl alcohol, Xylene, Tetrahydrofuran, Toluene, Water, and it is preferable to use these solvents alone or in combination.

The Hansen Solubility Parameter, developed by Charles M. Hansen in 1966, is a unique value for each solvent, and it may be composed of three parameters that are a dispersion component, a hydrogen bonding component, and a terminal polar component. At this time, the Total Solubility Parameter may be calculated using the equation below.

HANSEN SOLUBILITY PARAMETERS (HSP)

$$d^2 = dD^2 + dP^2 + dH^2$$

d = square root of cohesive energy density

$\delta$D: energy derived from dissipative forces

$\delta$P: energy derived from polarity

$\delta$H: energy derived from hydrogen bonding

The wet grinding process may be characterized by chemically activating a fusion precursor obtained from plasma.

The following may be added to activate the inorganic Si/Graphite so that it can be dispersed in the solvent: titanate coupling agents, such as isopropyl di(dioctylphosphite) titanate, tetraoctyl bis(ditridecylphosphite) titanate, and isopropyl triisostearoyl titanate, which can be dispersed organically or inorganically on the surface for activation; silane coupling agents, such as vinyltrimethoxysilane, 3-aminopropyltriethoxysilane, and 3-(trimethoxysilyl)propylsuccinic anhydride; fatty acids, such as stearic acid, palmitic acid, and oleic acid; acrylate copolymers, copolymers with pigmentaffinity groups, sodium alkylnaphthalenesulfonates, sodium polyacrylate, olefin-sodium maleate copolymers, carboxymethylcellulose, alkylbenzene(naphthalene)sulfonates, fatty acid amides, polyoxyethylene alkylamines, alkylamines (acetates, fatty acid salts), secondary (tertiary) alkyl amines (amides), and alkylimidazolines (amine derivatives); emulsifiers such as xanthan gum, sucrose fatty acid esters, glycerin fatty acid esters, propylene glycol fatty acid esters, polyvinylpyridone, and polyethylenepolypropylene glycol; and polymer dispersants such as alkylphenols, fatty acids, and higher fatty acid amines.

The wet grinding process may be characterized by homogenizing a fusion precursor using equipment that applies shear stress and cavitation to the activated slurry.

A silicon-graphene composite may be manufactured by a method including: preparing a silicon-graphite fusion precursor; plasma-treating the silicon-graphite fusion precursor; dispersing the plasma-treated silicon-graphite fusion precursor through a wet grinding process to form an exfoliated silicon-graphene composite; binder-coating the exfoliated silicon-graphene composite; and granulating the binder-coated exfoliated silicon-graphene composite to form a granulated silicon-graphene composite.

The preparing of the silicon-graphite fusion precursor, the plasma-treating of the silicon-graphite fusion precursor, and the dispersing of the plasma-treated silicon-graphite fusion precursor through the grinding process to form an exfoliated silicon-graphene composite are identical to those described above.

The next is a binder-coating the exfoliated silicon-graphene composite. Binder coating is a coating process for granulation. In the binder, as a resin that dissolves in a solvent, a thermoplastic resin, a thermosetting resin, pitch, or a hydrocarbon resin is applied as a resin that acts as a binder during coating and granulation of the exfoliated particles. Thermoplastic binders may be one of acrylic, ethyl cellulose, polyester, polysulfone, phenoxy, or polyamide, or a mixture of at least two of these, and the thermosetting binder may be one of amino, epoxy, or phenol, or a mixture of at least two of these. Pitch may be either coal-based or petroleum-based. In this example, coal tar pitch was added at 10 wt% to the composite and mixed using a mixer.

The final is granulating the binder-coated, exfoliated silicon-graphene composite to manufacture a granulated silicon-graphene composite. To achieve the desired rotational force for spheroidizing the binder-coated particles, equipment is utilized, and spheroidization can be achieved by controlling the operating rpm and process time, such as a ball mill, an attrition mill, a paste mixer, an ultra-fine grinder capable of controlling rotational force, or a mechanofusion machine capable of compacting particles using rotational force.

Hereinafter, a negative electrode active material for a lithium secondary battery according to another embodiment of the present invention will be described.

A negative electrode active material for a lithium secondary battery according to an embodiment of the present invention may include the silicon-graphene composite.

The negative electrode active material, composed of the silicon-graphene composite, exhibits a uniform distribution without pores or agglomeration through dispersion, and can achieve optimal charge/discharge capacity and initial efficiency for lithium secondary batteries, as well as exhibit excellent cycle characteristics.

Manufacturing Examples and Experimental Examples will be described in detail below.

### <Manufacturing Example and Comparative Example>

Dispersion is performed by selecting from among the high shear mixer, ball mill, attrition mill, high pressure homogenizer, three roll mill, basket mill, apex mill, paste mixer, planetary mixer, spike mill, and ultrasonic. In this invention, a basket mill was used for initial dispersion at 3,000 rpm, 2 hours, and a 0.4 mm zirconia ball, and a 4,000-watt ultrasonic disperser was then used to further exfoliate the graphite and silicon. Adding equipment capable of applying high shear could further enhance the exfoliation.

Table 1 shows the process conditions for the existing Comparative Example, Manufacturing Example 1, and Manufacturing Example 2, according to the manufacturing process. A pigment-friendly copolymer dispersant was used for plasma treatment and activation, and coin-half cells were manufactured with different boiling points between 60 and 160°C and different Hansen solubility parameters.

[Table 1]

| | Division | Comparati ve Example | Manufactur ing Example 1 | Manufactur ing Example 2 |
|---|---|---|---|---|
| Plasma | Graphite + Si | Graphite + Si $\mu$m-grade powder - > fusion precursor (Si 50%) | | |
| | Plasma | 20kW, $N_2$ purge, DC plasma | | |
| Activation - Dispersion | Activation (additive added) | Copolymer with pigment-affinic groups | | |

(continued)

|  | Division | Comparati ve Example | Manufactur ing Example 1 | Manufactur ing Example 2 | |
|---|---|---|---|---|---|
| - Active material manufactur ing<br>- Carbonizat ion | SOLVE NT (sing le or mixed ) | Used solvent | Dimethyl formamide | D.I Water | Methyl Ethyl Ketone |
|  |  | Hansen Solubili ty Paramete r | 24.9 | 47.8 | 19.1 |
|  |  | Boiling point (°C) | 60-160°C | 60-160°C | 60-160°C |
|  | Dispersion | | Basket mill -> Ultrasonic | | |
|  | Active material manufacturing | | Coal tar pitch (softening point 90°C, carbonization rate 54%) | | |
|  | Carbonization | | 1,100°C/$N_2$, RHK(Roller Hearth Kiln) | | |

### <Experimental Example 1> Cross-section of silicon-graphene composite according to dispersion

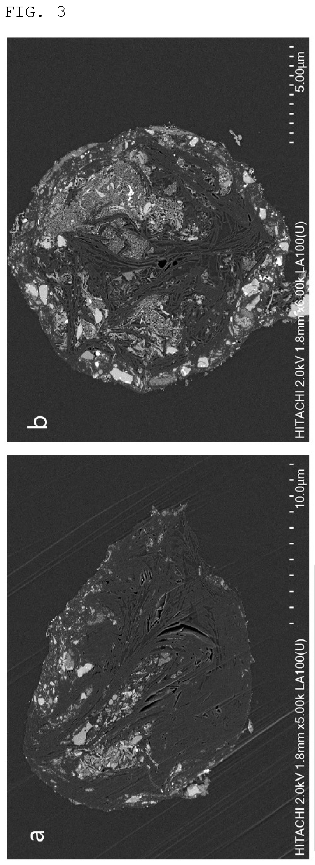

FIGS. 2 and 3 are SEM images of a cross-section of a silicon-graphene composite with poor dispersion.

Referring to FIGS. 2 and 3, silicon particles are observed to be aggregated on the graphene layer, as well as graphene layers without silicon particles, and large pores are observed within the composite. Furthermore, the distribution of silicon particles is uneven.

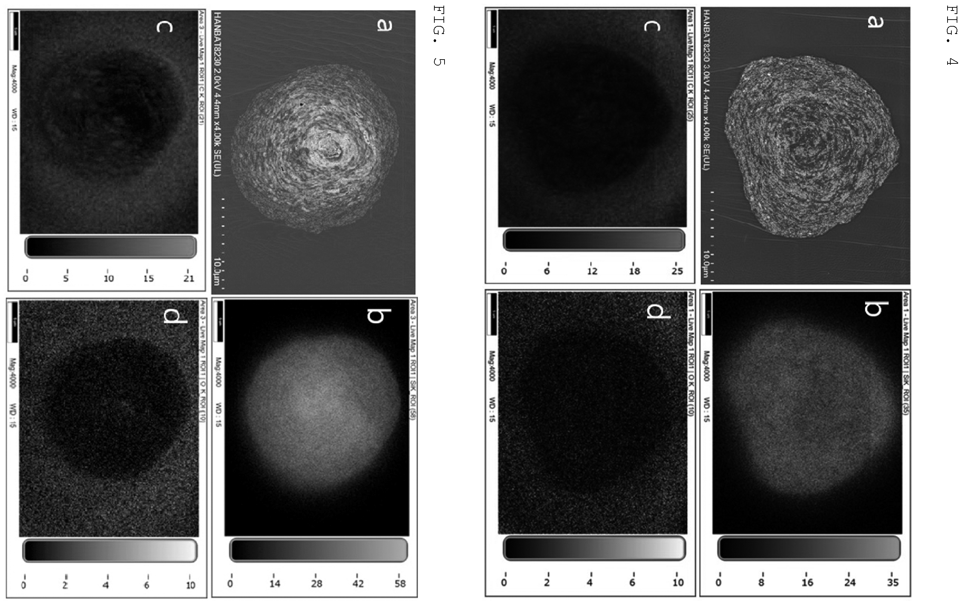

FIG. 4 is an SEM image and EDS Mapping images of a cross-section of a silicon-graphene composite with the highest dispersion.

The SEM image in FIG. 4A enables to observe a uniformly distributed silicon particle layer on the graphene layer, most similar to the schematic view in FIG. 1, and it is possible to confirm that the particles are arranged in a concentric, repeating pattern.

This can also be confirmed by the EDS mapping images in FIGS. 4B to 4D.

[0081] *

FIG. 5 is an SEM image and EDS Mapping images of a cross-section of a silicon-graphene composite with high dispersion.

The SEM image in FIG. 5A enables to observe a uniformly distributed silicon particle layer on the graphene layer, similar to the schematic diagram in FIG. 1, and it is possible to confirm that the particles are arranged in a concentric, repeating pattern.

This can also be confirmed through the EDS mapping images in FIGS. 5B to 5D.

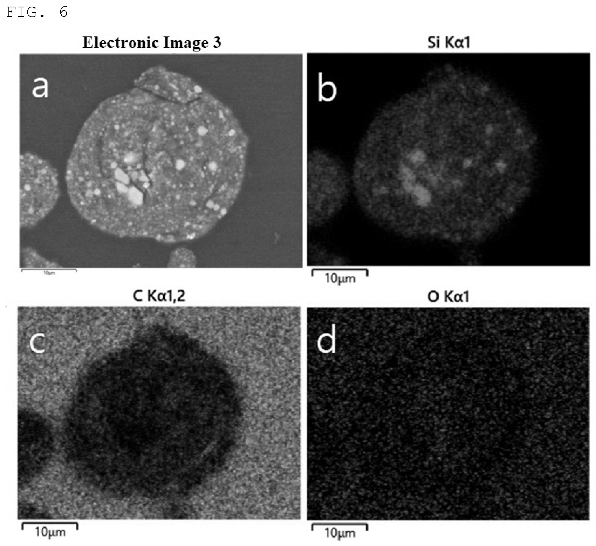

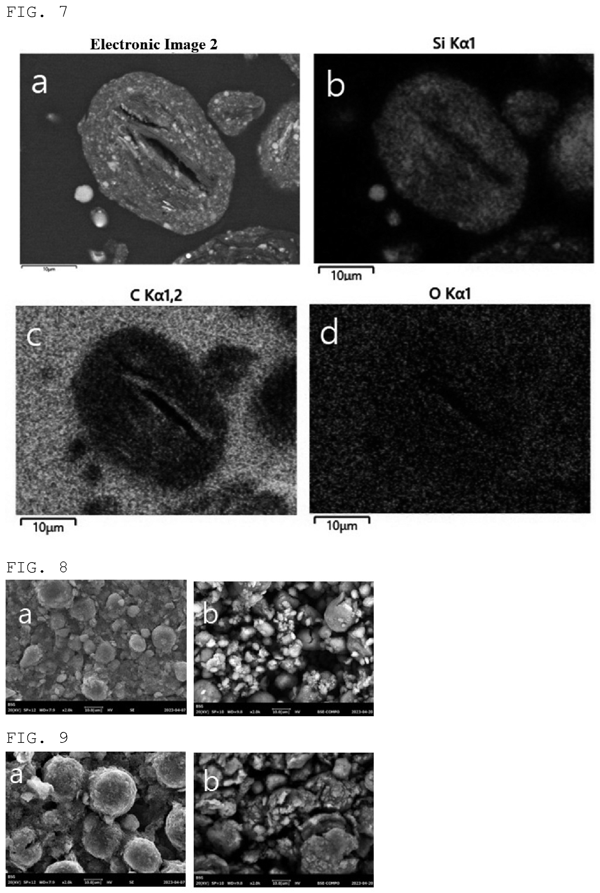

FIGS. 6 and 7 are SEM images and EDS Mapping images of a cross-section of a silicon-graphene composite with low dispersion.

The SEM images of FIGS. 6A and 7A enable to observe silicon particles that are not uniformly distributed on the graphene layer, unlike the schematic view in FIG. 1, but rather partially aggregated, large pores can also be observed internally, and no concentrically arranged structures can be confirmed.

This can also be confirmed through the EDS mapping images of FIGS. 6B to 6D and Figures 7B to 7D.

### * <Experimental Example 2> Electrode surface before and after cycle according to dispersion

FIG. 8 shows electrode surface images of a composite electrode manufactured using a high dispersion silicon-graphene composite after approximately 40 cycles.

FIG. 9 shows electrode surface images of a composite electrode manufactured using a low dispersion silicon-graphene composite after approximately 40 cycles.

Referring to FIG. 8, the electrode surface before 40 cycles (FIG. 8A) and after 40 cycles (FIG. 8B) can be compared, enabling to observe the breakage of some particles.

However, referring to FIG. 9, the electrode surface before 40 cycles (FIG. 9A) and after 40 cycles (FIG. 9B) can be compared, enabling to observe the breakage of many particles.

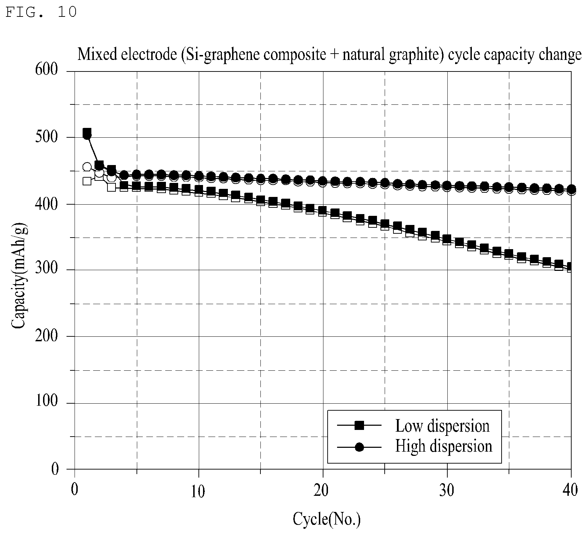

FIG. 10 shows the cycle capacity change graph of a mixed electrode manufactured using a silicon-graphene composite by dispersion degree. (Mixed electrode capacity: 450 mAh/g)

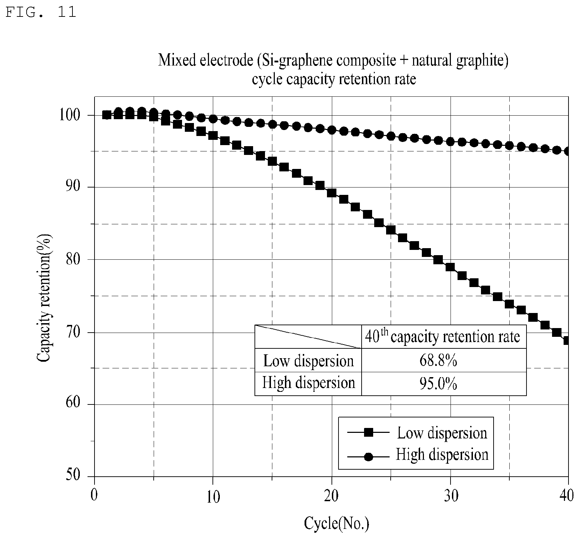

FIG. 11 shows the cycle capacity retention graph of a mixed electrode manufactured using a silicon-graphene composite by dispersion degree.

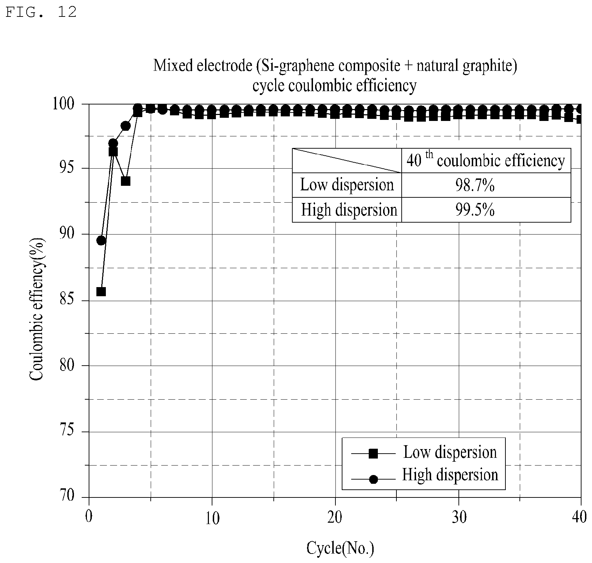

*FIG. 12 is the cycle coulombic efficiency graph of a mixed electrode manufactured using a silicon-graphene composite by dispersion degree.

Referring to FIGS. 10 and 11, the cycle capacity change and capacity retention rate of the mixed electrode manufactured using a highly dispersed silicon-graphene composite are improved compared to those manufactured using a low-dispersed silicon-graphene composite.

Referring to FIG. 12, the cycle-by-cycle Coulombic efficiency change is observed, and the cycle Coulombic efficiency of the mixed electrode manufactured using a low-dispersed silicon-graphene composite is lower, whereas the cycle Coulombic efficiency of the mixed electrode manufactured using a high-dispersed silicon-graphene composite is improved.

This enables to confirm that the cycle characteristics of lithium secondary batteries are improved by using the negative electrode active material of a highly dispersed silicon-graphene composite.

**<Experimental Example 3> Electrode expansion rate before and after cycle**

Table 2 shows the electrode expansion rate before and after the cycle according to the structure of the silicon-graphene composite, and the electrode expansion rate was calculated as the difference between the electrode thickness at the 40th cycle and the electrode thickness before the cycle.

[Table 2]

| State | Electrode thickness ($\mu$m) before 40 cycles | Electrode thickness ($\mu$m) after 40 cycles | Electrode expansion rate (%) |
|---|---|---|---|
| High dispersion | 72 | 83 | 15.2 |
| Low dispersion | 70 | 88 | 25.7 |

When the dispersion is high, the nano-silicon particles are uniformly distributed on the graphene layer and exist within the composite as primary nanoparticles without agglomeration. Thus, the paired graphene layer suppresses the expansion of the nano-silicon, resulting in low volume expansion.

Conversely, when the dispersion is low, the nano-silicon particles aggregate, resulting in volume expansion of the aggregated micron-sized powder rather than behavior as nano-silicon upon lithiation.

Consequently, it is possible to confirm that when the dispersion is high, the absolute volume change of the nano-silicon upon lithiation is small and the expansion buffering effect of the uniformly formed small pores within the nano-silicon and the expansion suppression effect of the graphene layer increase, resulting in a decrease in the electrode expansion rate.

**<Experimental Example 4> Dispersion**

FIG. 14 is a SEM image of the silicon-graphite fusion precursor.

Referring to FIG. 14, the silicon-graphite fusion precursor has a structure in which multiple silicon particles are positioned above and below the plate-like graphite, and nano-silicon particles are unevenly distributed between the expanded graphite.

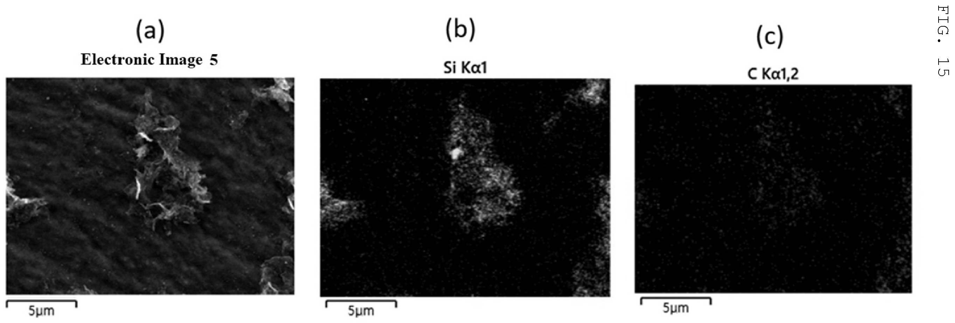

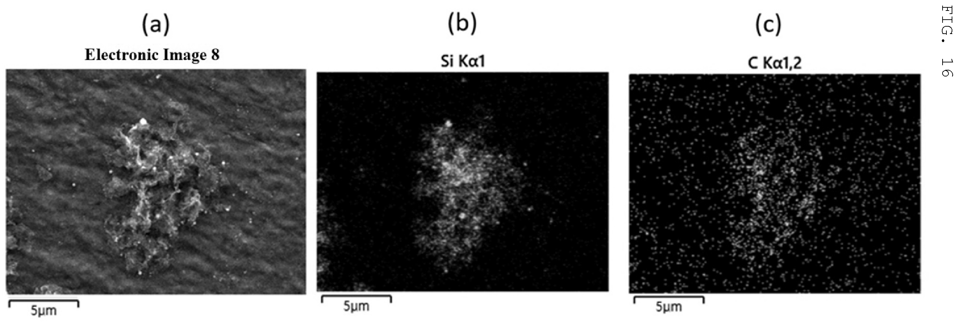

FIGS. 15 and 16 are (a) an SEM image showing silicon particles agglomerated rather than uniformly dispersed on the graphene surface, and EDS mapping images of (b) silicon and (c) graphene.

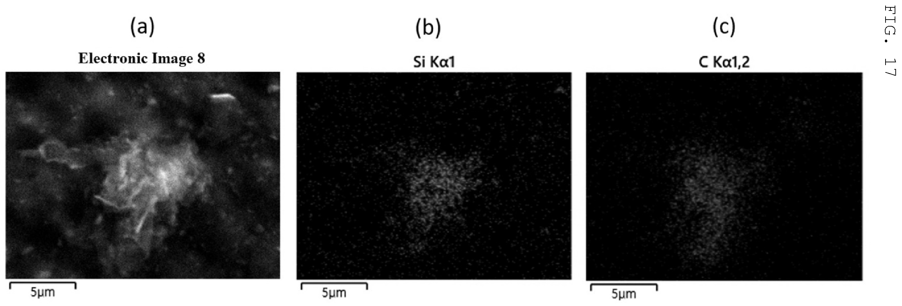

FIG. 17 is (a) an SEM image showing silicon particles uniformly dispersed on the graphene surface, and EDS mapping images of (b) silicon and (c) graphene.

Comparing (a) of FIG. 15, (a) of FIG. 16, and (a) of FIG. 17, it can be confirmed that the silicon of the silicon-graphene composite is uniformly dispersed on the graphite surface in (a) of FIG. 17, and comparing (b) of FIG. 15, (b) of FIG. 16 and (b) of FIG. 17, (c) of FIG. 15, (c) of FIG. 16 and (c) of FIG. 17, it can be confirmed that the silicon of the silicon-graphene composite is uniformly dispersed on the graphene surface in (b) of FIG. 17 and (c) of FIG. 17.

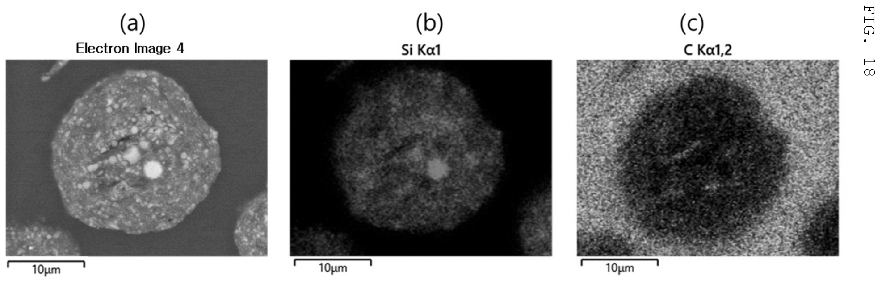

FIG. 18 is an image showing a cross-section of a negative electrode active material manufactured using the silicon-graphene composite of FIGS. 15 and 16, and

Table 2 is an EDS map sum spectrum. The manufactured spherical active material was dispersed using an ion beam milling machine, and SEM and EDS mapping were performed.

[Table 3]

| Map Sum Spectrum | | |
|---|---|---|
| Element | Wt% | Atomic % |
| C | 76.85 | 85.50 |

(continued)

| Map Sum Spectrum | | |
|---|---|---|
| Element | Wt% | Atomic % |
| O | 9.89 | 8.26 |
| Si | 12.81 | 6.10 |
| S | 0.15 | 0.06 |
| Cl | 0.07 | 0.03 |
| Fe | 0.23 | 0.05 |
| Total: | 100.00 | 100.00 |

Looking at the inside with reference to FIG. 18, it can be observed that there are many μm-sized coarse silicon aggregates between the graphite.

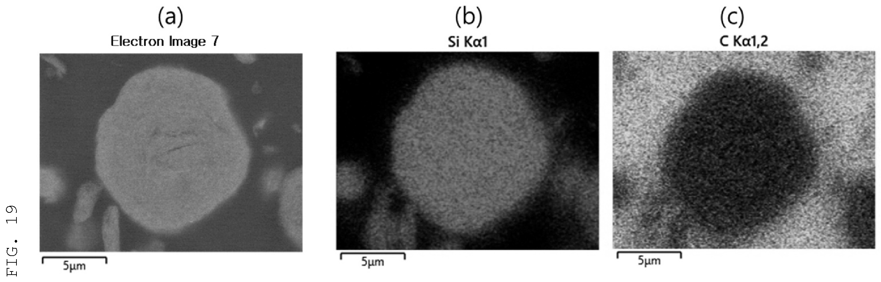

FIG. 19 is an image showing a cross-section of a negative electrode active material manufactured using the silicon-graphene composite of FIG. 17, and Table 4 is an EDS map sum spectrum.

[Table 4]

| Map Sum Spectrum | | |
|---|---|---|
| Element | Wt% | Atomic % |
| C | 77.15 | 86.34 |
| O | 7.55 | 6.35 |
| Si | 15.24 | 7.29 |
| Cl | 0.06 | 0.02 |
| Total: | 100.00 | 100.00 |

Looking at the inside with reference to FIG. 19, it can be observed that graphite and silicon are uniformly dispersed.

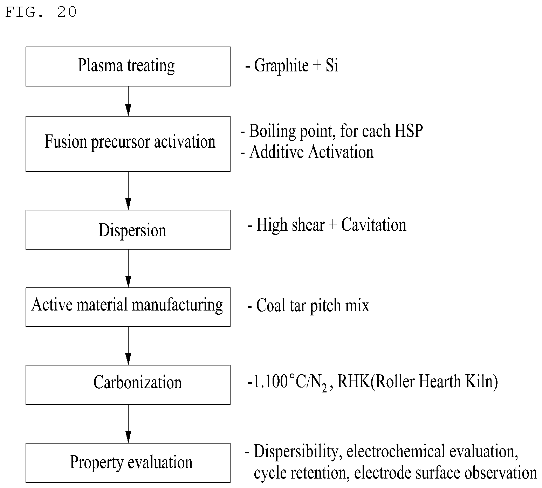

FIG. 20 is a flowchart illustrating the step-by-step process from the plasma treatment step to the final property evaluation.

Table 5 shows the electrochemical evaluation results of Comparative Example, Manufacturing Example 1, and Manufacturing Example 2 manufactured as in Table 1.

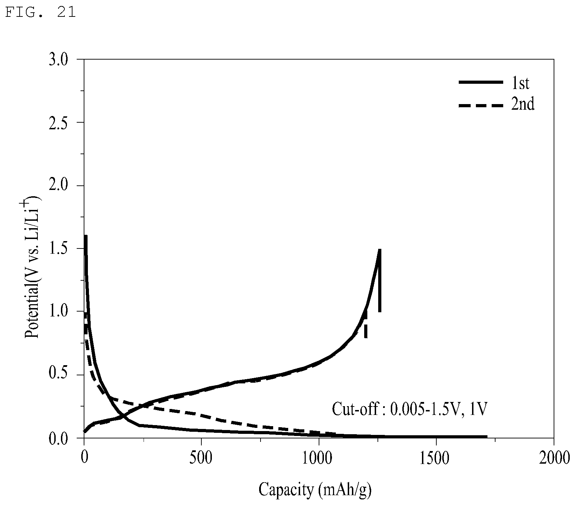

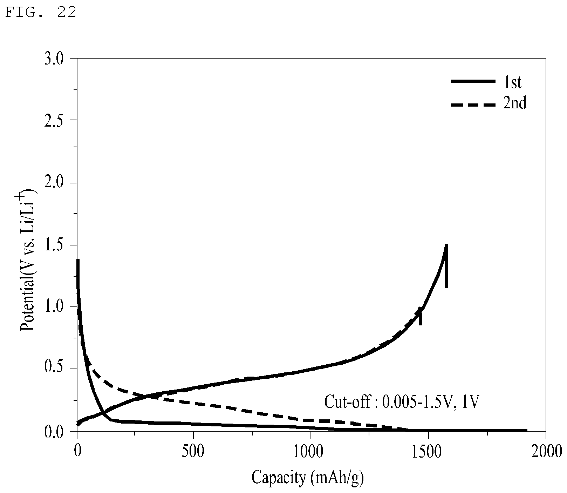

FIGS. 21, 22, and 23 are graphs showing the electrochemical evaluation results of Comparative Example, Manufacturing Example 1, and Manufacturing Example 2, respectively.

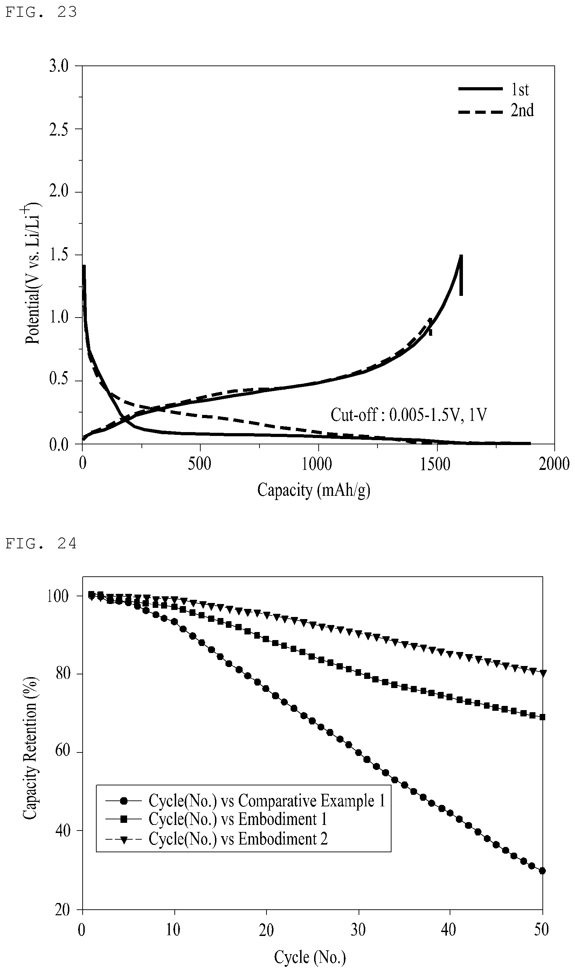

FIG. 24 is a graph showing the cycle retention of Comparative Example, Manufacturing Example 1, and Manufacturing Example 2.

[Table 5]

| | | Division | Comparative Example | Manufacturing Example 1 | Manufacturing Example 2 |
|---|---|---|---|---|---|
| Electrochemical evaluation | Formation (1st cycle) | Charging capacity (mAh/g) | 1,716 | 1,921 | 1,894 |
| | | Discharging capacity (mAh/g) | 1,258 | 1,583 | 1,602 |
| | | Initial efficiency (%) | 73.3 | 82.4 | 84.6 |
| | Cycle Retention ( %, 50th/1st) | | 29.7 | 68.9 | 80.2 |

Referring to Table 5 and FIGS. 21 to 24, in the case of Comparative Example, compared to Manufacturing Example 1 and Manufacturing Example 2, it can be confirmed that the initial charge/discharge characteristics and initial efficiency were measured to be significantly lower due to the nano-silicon agglomerating into agglomeration like micron-scale silicon, and a sharp decline was observed in the cycle retention.

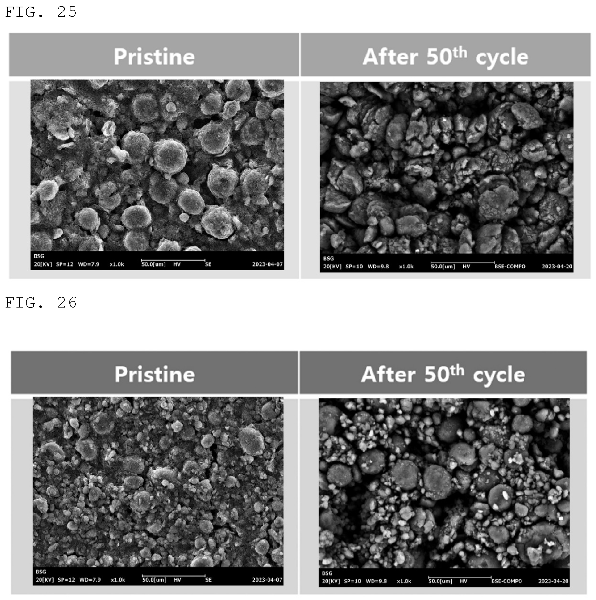

FIGS. 25 and 26 show the results of observing the surface condition of the negative electrode after cleaning it with a DMC solution in a charged state after cycle retention.

Referring to FIGS. 25 and 26, in the case of Comparative Example, where the cycle retention was measured to be low in relation to the electrode surface after the 50th cycle evaluation, it was observed that the spherical negative electrode active material surface was broken, and in the case of Manufacturing Example 1, where the cycle retention characteristics were good, it was observed that the negative electrode active material remained the same as the initial state even after the cycle.

Therefore, by dispersing the silicon-graphite fusion precursor and grapheneizing it, an optimal dispersion state with exfoliated graphite and uniformly dispersed silicon particles can be achieved, and through this, a negative electrode active material can be manufactured, thereby manufacturing a secondary battery exhibiting high charge/discharge characteristics and stable cycle characteristics.

The description of the present invention described above is for illustrative purposes, and those skilled in the art will understand that the present invention is easily modifiable into other specific forms without changing the technical idea or essential features of the present invention. Therefore, the embodiments described above should be understood in all respects as illustrative and not restrictive. For example, each component described as single may be implemented in a distributed manner, and similarly, components described as distributed may also be implemented in a combined form.

The scope of the present invention is indicated by the claims described below, and all changes or modified forms derived from the meaning and scope of the claims and their equivalent concepts should be construed as being included in the scope of the present invention.

**Claims**

1. A silicon-graphene composite in which, in a cross section thereof including the center, a plurality of pair layers are arranged as unit circles, the plurality of unit circles being arranged in a concentric circle form, and each pair layer comprises:

   a graphene layer; and
   a particle layer including a plurality of nano-silicon particles uniformly positioned on the graphene layer.

2. The silicon-graphene composite of claim 1, wherein the pair layers form a circular shape in a connected or unconnected state.

3. The silicon-graphene composite of claim 1, wherein the thickness of the pair layers is 50 nm to 500 nm.

4. The silicon-graphene composite of claim 1, wherein the thickness of the graphene layer is 1 nm to 300 nm.

5. A method for dispersing a silicon-graphite fusion precursor, the method comprising:

   preparing a silicon-graphite fusion precursor;
   plasma-treating the silicon-graphite fusion precursor; and
   dispersing the plasma-treated silicon-graphite fusion precursor through a wet grinding process to form a silicon-graphene composite.

6. The method of claim 5, wherein the silicon-graphite fusion precursor has a structure in which a plurality of silicon particles are positioned on the upper and lower portions of plate-like graphite.

7. The method of claim 5, wherein the content of the silicon is greater than 0 and less than or equal to 70 wt%, wherein the content of the silicon is in the case in which the fusion precursor is applied alone, a mixture of the fusion precursor and silicon is applied, or a composite mixed with expanded graphite and silicon is applied.

8. The method of claim 5, wherein in the plasma-treating of the silicon-graphite fusion precursor, nitrogen ($N_2$) is purged into a silicon-expanded graphite mixture, which is a silicon-graphite fusion precursor, and DC plasma treatment is performed.

9. The method of claim 5, wherein a solvent used in the wet grinding process has a boiling point of 60 to 160°C.

10. The method of claim 5, wherein a solvent used in the wet grinding process has a Hansen Solubility Parameter of 17 to 23 MPa ½ or 45 to 50 MPa ½.

11. The method of claim 5, wherein the wet grinding process adds a dispersant or coupling agent enabling to chemically activate the fusion precursor.

12. The method of claim 5, wherein the wet grinding process homogenizes the fusion precursor by applying shear stress and cavitation.

13. The method of claim 5, wherein the silicon-graphene composite is a structure in which a plurality of silicon particles are positioned on the surface of single exfoliated graphene.

14. The method of claim 13, wherein the silicon particles are uniformly distributed on the upper and lower portions of the single graphene.

15. A method for manufacturing silicon-graphene, the method comprising: preparing a silicon-graphite fusion precursor;

> plasma-treating the silicon-graphite fusion precursor;
> dispersing the plasma-treated silicon-graphite fusion precursor through a wet grinding process to form an exfoliated silicon-graphene composite;
> binder-coating the exfoliated silicon-graphene composite; and
> granulating the binder-coated exfoliated silicon-graphene composite to manufacture a granulated silicon-graphene composite.

16. The method of claim 15, wherein the thickness of the graphene layer is 1 nm to 300 nm.

17. A negative electrode active material for a lithium secondary battery, the negative electrode active material comprising a silicon-graphene composite of claim 1.

FIG. 1

FIG. 2

FIG. 3

FIG. 4

FIG. 5

FIG. 6

Electronic Image 3

Si Kα1

C Kα1,2

O Kα1

FIG. 7

**Electronic Image 2**

**Si Kα1**

**C Kα1,2**

**O Kα1**

FIG. 8

FIG. 9

FIG. 10

Mixed electrode (Si-graphene composite + natural graphite) cycle capacity change

Legend:
- ■ Low dispersion
- ● High dispersion

X-axis: Cycle(No.)
Y-axis: Capacity(mAh/g)

FIG. 11

Mixed electrode (Si-graphene composite + natural graphite)
cycle capacity retention rate

| | 40th capacity retention rate |
|---|---|
| Low dispersion | 68.8% |
| High dispersion | 95.0% |

■ Low dispersion
● High dispersion

FIG. 12

Mixed electrode (Si-graphene composite + natural graphite)
cycle coulombic efficiency

| | 40 th coulombic efficiency |
|---|---|
| Low dispersion | 98.7% |
| High dispersion | 99.5% |

FIG. 13

FIG. 14

(a)
Electronic Image 5

(b)
Si Kα1

(c)
C Kα1,2

5μm

5μm

5μm

FIG. 15

EP 4 769 542 A1

(a) Electronic Image 8

(b) Si Kα1

(c) C Kα1,2

5μm     5μm     5μm

FIG. 16

EP 4 769 542 A1

23

FIG. 17

(a)

**Electronic Image 8**

5µm

(b)

Si Kα1

5µm

(c)

C Kα1,2

5µm

FIG. 18

FIG. 19

(a) Electron Image 7

(b) Si Kα1

(c) C Kα1,2

FIG. 20

| Plasma treating | - Graphite + Si |
| Fusion precursor activation | - Boiling point, for each HSP<br>- Additive Activation |
| Dispersion | - High shear + Cavitation |
| Active material manufacturing | - Coal tar pitch mix |
| Carbonization | $-1.100\,°C/N_2$, RHK(Roller Hearth Kiln) |
| Property evaluation | - Dispersibility, electrochemical evaluation,<br>cycle retention, electrode surface observation |

FIG. 21

FIG. 22

FIG. 23

Cut-off : 0.005-1.5V, 1V

FIG. 24

FIG. 25

FIG. 26

# EP 4 769 542 A1

## INTERNATIONAL SEARCH REPORT

International application No.

**PCT/KR2024/010794**

### A. CLASSIFICATION OF SUBJECT MATTER

**H01M 4/36**(2006.01)i; **H01M 4/38**(2006.01)i; **H01M 4/587**(2010.01)i; **H01M 10/0525**(2010.01)i; **C01B 33/02**(2006.01)i; **C01B 32/182**(2017.01)i; **C01B 32/19**(2017.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01B 32/182(2017.01); H01M 10/052(2010.01); H01M 10/0525(2010.01); H01M 4/38(2006.01); H01M 4/48(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복합체(composite), 실리콘-그래핀(silicon-graphene), 페어층(pair layer), 동심원 (concentric circle), 융합 전구체(fusion precursor), 분산(dispersion), 플라즈마(plasma), 습식 분쇄(wet milling), 균질화 (homogenization), 음극활물질(anode active material)

### C. DOCUMENTS CONSIDERED TO BE RELEVANT

| Category* | Citation of document, with indication, where appropriate, of the relevant passages | Relevant to claim No. |
|---|---|---|
| | CN 103715405 A (SHENZHEN CITY BATTERY NANOMETER TECHNOLOGY CO., LTD.) 09 April 2014 (2014-04-09) | |
| Y | See claims 1 and 8; and paragraph [0022]. | 5-14 |
| A | | 1-4,15-17 |
| | KR 10-2015-0055178 A (CHEORWON PLASMA RESEARCH INSTITUTE) 21 May 2015 (2015-05-21) | |
| Y | See claim 3; and paragraphs [0040], [0083] and [0087]. | 5-14 |
| | KR 10-2014-0082036 A (POSCO et al.) 02 July 2014 (2014-07-02) | |
| A | See claims 1-17. | 1-17 |
| | KR 10-2017-0086870 A (KNU-INDUSTRY COOPERATION FOUNDATION) 27 July 2017 (2017-07-27) | |
| A | See claims 1-20. | 1-17 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2024** | **06 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/010794** |

**C.  DOCUMENTS CONSIDERED TO BE RELEVANT**

| Category* | Citation of document, with indication, where appropriate, of the relevant passages | Relevant to claim No. |
| --- | --- | --- |
| A | KR 10-1855848 B1 (KNU-INDUSTRY COOPERATION FOUNDATION) 09 May 2018 (2018-05-09)<br>See claims 1-19. | 1-17 |
| PX | KR 10-2668231 B1 (BSG MATERIALS CO., LTD.) 22 May 2024 (2024-05-22)<br>See claims 1-5, 9 and 10.<br>※ This document is the published patent of an earlier application that serves as a basis for claiming priority of the present international application. | 1-4,15-17 |

Form PCT/ISA/210 (second sheet) (July 2022)

# EP 4 769 542 A1

## INTERNATIONAL SEARCH REPORT
### Information on patent family members

International application No.

**PCT/KR2024/010794**

| Patent document cited in search report | | | Publication date (day/month/year) | Patent family member(s) | | | Publication date (day/month/year) |
|---|---|---|---|---|---|---|---|
| CN | 103715405 | A | 09 April 2014 | CN | 103715405 | B | 01 February 2017 |
| KR | 10-2015-0055178 | A | 21 May 2015 | KR | 10-1563358 | B1 | 27 October 2015 |
| KR | 10-2014-0082036 | A | 02 July 2014 | KR | 10-1491092 | B1 | 09 February 2015 |
| KR | 10-2017-0086870 | A | 27 July 2017 | KR | 10-1778652 | B1 | 14 September 2017 |
| KR | 10-1855848 | B1 | 09 May 2018 | None | | | |
| KR | 10-2668231 | B1 | 22 May 2024 | None | | | |

Form PCT/ISA/210 (patent family annex) (July 2022)

34